# NEUE EUROPÄISCHE PATENTSCHRIFT

(11) **EP 2 785 755 B2**
(45) Veröffentlichungstag und Bekanntmachung des Hinweises auf die Entscheidung über den Einspruch: **11.12.2019**
(45) Hinweis auf die Patenterteilung: 04.01.2017
(21) Anmeldenummer: 12784609.5
(22) Anmeldetag: 15.11.2012
(51) Int. Cl.: C08G 18/10, C08G 18/12, C08G 18/28, C09J 175/04

(54) **VERNETZBARE MASSEN AUF BASIS VON ORGANYLOXYSILANTERMINIERTEN POLYURETHANEN**
CROSS-LINKABLE MASSES BASED ON ORGANYL-OXYSILANE-TERMINATED POLYURETHANES
MATIÈRES RÉTICULABLES À BASE DE POLYURÉTHANES À TERMINAISON ORGANYLOXYSILANE

(30) Priorität: 01.12.2011 DE 102011087603
(43) Veröffentlichungstag der Anmeldung: 08.10.2014
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Budczinski, Angelika
(86) Internationale Anmeldenummer: PCT/EP2012/072708
(87) Internationale Veröffentlichungsnummer: WO 2013/079330

(56) Entgegenhaltungen:
- EP-A1- 2 583 988
- DE-A1-102006 054 155
- DE-A1-102009 029 200
- DE-A1-102009 057 600

## Beschreibung

Die Erfindung betrifft vernetzbare Massen auf der Basis von silanterminierten Polyurethanen, Verfahren zu deren Herstellung und deren Verwendung als Kleb- und Dichtstoffe, insbesondere als Klebstoffe mit hoher Zugscherfestigkeit.

In Klebstoffanwendungen, die hohe Zugscherfestigkeiten der ausgehärteten Klebstoffe verlangen, werden typischerweise isocyanatvernetzende PU-Klebstoffe eingesetzt. Diese enthalten üblicherweise isocyanatfunktionelle Polyurethanpolymere auf Basis von aromatischen Polyisocyanaten. Derartige Systeme härten durch eine Reaktion der Isocyanatgruppen mit (Luft-)Feuchtigkeit aus.

Da PU-Klebstoffe über eine chemische Vernetzungsreaktion härten und sich dabei auch über chemische Bindungen an zahlreiche Substrate (z.B. Holz, Metalle, keramische Untergründe, Glas etc.) anbinden können, zeigen sie meist sehr gute mechanische Eigenschaften und sind auch relativ beständig gegenüber äußeren (Witterungs-) Einflüssen wie Feuchtigkeit oder direkten Wasserkontakt.

Jedoch besitzen isocyanatvernetzende Klebstoffe auch einige z.T. massive systemimmanente Nachteile. Zum Beispiel zeigen einkomponentige PU-Klebstoffsysteme in der Regel nur moderate Härtungsgeschwindigkeiten. Zwar kann die Isocyanatvernetzung prinzipiell durch eine geeignete Katalyse stark beschleunigt werden. Aber da eine derartige Katalyse grundsätzlich auch unerwünschte Nebenreaktionen der Isocyanatgruppen katalysieren kann (z.B. Bildung von Allophanaten, Uretdionen, Isocyanuraten etc.), weisen die entsprechenden Systeme dann keine hinreichende Lagerstabilität mehr auf.

Ein weiterer Nachteil der meisten isocyanatvernetzenden Klebstoffe ist die gesundheitliche Einstufung, die von sensibilisierend bis giftig reicht. Kritisch ist hier insbesondere die Menge an verbleibenden monomeren Isocyanaten im nicht ausgehärteten Klebstoff, die nur schwer zu entfernen sind. Dies ist insofern problematisch für den Endanwender, d.h. den Handwerker oder Do-it-yourself-Anwender, da er nicht nur mit dem ausgehärteten und damit isocyanatfreien und völlig unbedenklichen Produkt, sondern auch mit dem noch nicht ausgehärteten und somit noch isocyanathaltigen Klebstoff bzw. mit den in diesem Klebstoff enthaltenen monomeren Isocyanaten in Kontakt kommt. Beim ungeübten Heimwerker besteht dabei die besondere Gefahr, dass die Produkte gegebenenfalls nicht fachkundig und/oder sachgerecht angewendet werden. Zusätzliche Gefahren gehen hier auch von einer nicht sachgerechten Lagerung, z.B. in Reichweite von Kindern, aus. Beim professionellen Handwerker hingegen ist zwar von einer weitgehend sachgerechten Anwendung und Lagerung auszugehen. Hier besteht jedoch meist das Problem, dass der professionelle Anwender äußerst regelmäßig - gegebenenfalls sogar mehrmals täglich - mit dem isocyanathaltigen Material umgehen muss, was insbesondere ob der o.g. sensibilisierenden sowie gegebenenfalls krebserregenden Wirkung von Isocyanaten potentiell kritisch ist.

Etwas günstiger sind hier isocyanatvernetzende Klebstoffe, die nur sehr geringe Gehalte an flüchtigen Isocyanaten aufweisen und somit zumindest kennzeichnungsfrei sind. Diese basieren jedoch meist auf aliphatischen Isocyanaten, welche wiederum weniger reaktiv sind. Diese Klebstoffe sind somit für Anwendungen, in denen es auf eine schnelle Abbindung des Klebstoffes ankommt, noch einmal ungünstiger als herkömmliche PU-Klebstoffe.

Eine alternative Härtungstechnologie, die zunehmend Anwendung im Klebstoffbereich findet, ist die Silanvernetzung, bei der alkoxysilanfunktionelle Prepolymere bei Kontakt mit Luftfeuchtigkeit zunächst hydrolysieren und anschließend durch eine Kondensationsreaktion aushärten. Die entsprechenden silanfunktionellen - meist silanterminierten - Prepolymere sind im Allgemeinen toxikologisch völlig unbedenklich.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. So zeigen Klebstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie zum einen gewisse Reißfestigkeit aufweisen und zum anderen hochelastisch sein können. Daher sind die entsprechenden Materialien insbesondere für Dichtstoffe sowie für elastische Klebstoffe mit moderater Zugscherfestigkeit geeignet.

Dabei werden in vielen Anwendungen einkomponentige Systeme (1K-Systeme) bevorzugt, die bei Kontakt mit Luftfeuchtigkeit aushärten. Die entscheidenden Vorteile von einkomponentigen Systemen ist vor allem deren sehr leichte Applizierbarkeit, da hier keine Mischung verschiedener Klebstoffkomponenten durch den Anwender erforderlich ist. Neben der Zeit-/Arbeitsersparnis und der sicheren Vermeidung eventueller Dosierungsfehler, ist bei einkomponentigen Systeme auch nicht die Notwendigkeit gegeben, den Kleb-/Dichtstoff innerhalb eines meist recht engen Zeitfensters zu verarbeiten, wie dies bei mehrkomponentigen Systemen nach erfolgter Durchmischung der beiden Komponenten der Fall ist.

Entsprechende alkoxysilanterminierte Prepolymere sind seit langem Stand der Technik und beispielsweise unter den Handelsnahmen GENIOSL STP-E (Fa. Wacker-Chemie AG), MS-Polymer (Fa. Kaneka), DESMOSEAL (Fa. Bayer AG) oder SPUR (Fa. Momentive) kommerziell erhältlich.

Nachteilig an den meisten gängigen silanvernetzenden Systemen ist jedoch die Tatsache, dass zwar moderate Zugscherfestigkeiten erreichbar sind, die typischerweise in einer Größenordnung von 1-4 MPa liegen, Zugscherfestigkeiten >5 MPa aber nicht oder bestenfalls in sehr ausgefallenen Formulierungen erreichbar sind. Diese ausgefallenen Formulierungen weisen jedoch wiederum andere Beschränkungen auf, z.B. eine auf den Einsatz von Ruß als Füllstoff zurückgehende Schwarzfärbung wie beispielsweise in WO 02/090411 beschrieben. Außerdem lassen sich auch mit den in WO 02/090411 beschriebenen Formulierungen keine Zugfestigkeiten >6,5 MPa erreichen.

Eine weitere Möglichkeit, die Reißfestigkeit von silanvernetzenden Systemen zu steigern, stellt der Einbau von kurzkettigen Diolen in silanvernetzende Polyurethane dar, wie er in WO 05/000931 beschrieben ist. Doch auch mit dieser Maßnahme lassen sich nur Systeme mit moderat verbesserten Zugfestigkeiten erreichen. In Anwendungen, die sehr hohe Zugscherfestigkeiten verlangen, sind herkömmliche silanvernetzende Klebstoffe daher meist nicht anwendbar.

Eine der wenigen Ausnahmen stellen silanvernetzende Systeme dar, wie sie in WO2011/026658 beschrieben sind. Hier werden sehr hohe Zugscherfestigkeiten von bis zu 16 MPa durch den Einsatz von silanterminierten Polyurethanen erreicht, die auf extrem kurzkettigen Polyolen basieren. Dies führt zum einen dazu, dass die resultierenden silanvernetzenden Polymere eine sehr hohe Dichte an zur Wasserstoffbrückenbildung befähigten Urethan- und/oder Harnstoffeinheiten aufweisen, und zum anderen dazu, dass diese Polymere relativ kurzkettig sind und somit eine entsprechend hohe Zahl an vernetzbaren Silanendgruppen aufweisen. Derartige Systeme besitzen jedoch zwangsläufig zwei systemimmanente Nachteile. Denn erstens erfordert die Herstellung von Prepolymeren mit einer hohen Konzentration an silanvernetzenden Gruppen entsprechend große Silanmengen. Diese stellen jedoch in der Regel die kostenintensivsten Prepolymerbestandteile dar, was die Rohstoffkosten für diese Produkte entsprechend steigen lässt. Zweitens führt die zur Erreichung hoher Zugscherfestigkeiten ebenfalls notwendige hohe Konzentration an Urethan- und/oder Harnstoffgruppen zu sehr hohen Prepolymerviskositäten. Entsprechend problematisch ist die Compoundierung dieser Prepolymere zu fertig formulierten Klebstoffen sowie auch die Anwendung dieser meist ebenfalls vergleichsweise hochviskosen Endprodukte.

Das Dokument DE10 2009 029 200 A1 offenbart Alkoxysilangruppen modifizierte Polymere und ihre Anwendung als Klebstoffe mit hoher Zugscherfestigkeit (siehe Absatz [0001]).

Gegenstand der Erfindung sind Mischungen (A) enthaltend mindestens zwei verschiedene Verbindungen der Formel

Y-[NH-C(=O)-NR³-(CR¹₂)_{b}-SiRₐ(OR²)₃₋ₐ]ₓ (I),

wobei
- Y: einen x-wertigen organischen Rest bedeutet,
- R³: gleich oder verschieden sein kann und eine Gruppe -CH(COOR')-CH₂-COOR', eine Gruppe -(CR¹₂)_{b}-SiRₐ(OR²)₃₋ₐ oder einen gegebenenfalls substituierten Kohlenwasserstoffrest mit 1 bis 20 Kohlenstoffatomen bedeutet,
- R': gleich oder verschieden sein kann und einen einwertigen, gegebenenfalls substituierten Kohlenwasserstoffrest darstellt,
- R: gleich oder verschieden sein kann und einen einwertigen, gegebenenfalls substituierten, SiC-gebundenen Kohlenwasserstoffrest darstellt,
- R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
- R²: gleich oder verschieden sein kann und Wasserstoffatom oder einen einwertigen, gegebenenfalls substituierten Kohlenwasserstoffrest darstellt,
- x: eine ganze Zahl von 1 bis 10, bevorzugt 1, 2, 3 oder 4, besonders bevorzugt 2 oder 3, insbesondere 2, ist,
- a: gleich oder verschieden sein kann und 0, 1 oder 2, bevorzugt 0 oder 1, ist und
- b: gleich oder verschieden sein kann und eine ganze Zahl von 1 bis 10, bevorzugt 1, 3 oder 4, besonders bevorzugt 1 oder 3 ist,
mit den Maßgaben, dass ein Teil der Reste Y mindestens eine Urethan- und/oder Harnstoffgruppe sowie mindestens eine Polyether- und/oder Polyestergruppe enthält
und dass es sich bei mehr als 50% aller Urethan- und Harnstoffgruppen, die in den Verbindungen der Formel (I) der Mischung (A) enthalten sind, um Harnstoffgruppen handelt, die Teil einer Endgruppe der Formel

-NH-C(=O)-NR³-(CR¹₂)_{b}-SiRₐ(OR²)₃₋ₐ (II)

sind.

Vorzugsweise handelt es sich bei mindestens 55 %, besonders bevorzugt bei mindestens 60%, insbesondere bei mindestens 65%, aller Urethan- und Harnstoffgruppen, die in den in der erfindungsgemäßen Mischung (A) enthaltenen Verbindungen der Formel (I) enthalten sind, um Harnstoffgruppen, die Teil einer Endgruppe der Formel (II) sind.

In einer ganz besonders vorteilhaften Ausführung der Erfindung handelt es sich bei mindestens 70 % aller Urethan- und Harnstoffgruppen, die in den in der erfindungsgemäßen Mischung (A) enthaltenen Verbindungen der Formel (I) enthalten sind, um Harnstoffgruppen, die Teil einer Endgruppe der Formel (II) sind.

Bei den erfindungsgemäßen Mischungen (A) handelt es sich bevorzugt um solche enthaltend Verbindungen (A1) der Formel

y¹ [NH-C(=O)-NR³-(CR¹₂)_{b}-SiRₐ(OR²)₃₋ₐ]_{x'} (I')

und Verbindungen (A2) der Formel

Y²-[NH-C(=O)-NR³-(CR¹₂)_{b}-SiRₐ(OR²)₃₋ₐ]_{x"} (I"),

wobei
Y¹ einen x'-wertigen organischen Rest bedeutet, der mindestens eine Urethan- und/oder Harnstoffgruppe und mindestens eine Polyether- und/oder Polyestereinheit sowie mindestens eine Gruppe Y² enthält,
Y² einen x"-wertigen gegebenenfalls substituierten, Kohlenwasserstoffrest mit 2 bis 40 Kohlenstoffatomen, einen N,N,N-trialkyl-substituierten Isocyanuratring oder einen N,N,N-triaryl-substituierten Isocyanuratring bedeutet, der frei ist von Urethan-, Harnstoff-, Polyether- und Polyestergruppen,
x' und x" jeweils unabhängig voneinander die bei Formel (I) angegebene Bedeutung für x aufweisen sowie R, R¹, R², R³, a und b eine der in Formel (I) angegebenen Bedeutungen haben,
mit der Maßgabe, dass es sich bei mehr als 50% aller Urethan- und Harnstoffgruppen, die in den Verbindungen der Formel (I') und (II") der Mischung (A) enthalten sind, um Harnstoffgruppen handelt, die Teil einer Endgruppe der Formel

-NH-C(=O)-NR³-(CR¹₂)_{b}-SiRₐ(OR²)₃₋ₐ (II)

sind.

Vorzugsweise enthält die erfindungsgemäße Mischung (A) weniger als 10 Gew.-%, besonders bevorzugt weniger als 5 Gew.-%, insbesondere weniger als 1 Gew.-% an Verbindungen der Formel (I), die nicht einer der Formeln (I') oder (I") entsprechen, jeweils bezogen auf die gesamte Masse aller Verbindungen der Formel (I) in der Mischung (A).

In einer besonderen Ausführung der Erfindung enthält die Mischung (A) keine Verbindungen der Formel (I), die nicht einer der Formeln (I') oder (I") entsprechen.

Vorzugsweise enthält die erfindungsgemäße Mischung (A) 10 bis 90 Mol-%, besonders bevorzugt 25 bis 90 Mol-%, insbesondere 50 bis 80 Mol-%, an Verbindungen der Formel (I") jeweils bezogen auf die Gesamtsumme an Verbindungen der Formeln (I') und (I") in der Mischung (A).

Die erfindungsgemäße Mischung (A) kann nur jeweils eine Art von Verbindung der Formeln (I') und (I") enthalten wie auch Gemische unterschiedlicher Arten von Verbindungen der Formeln (I') und (I"). Dabei kann die Mischung (A) ausschließlich Verbindungen der Formeln (I') und (I") enthalten, in denen mehr als 90%, bevorzugt mehr als 95%, besonders bevorzugt mehr als 98%, aller an den Rest Y¹ bzw. Y² gebundenen Silylgruppen identisch sind. Es kann sich aber auch um eine Mischung (A) handeln, die zumindest zum Teil Verbindungen der Formeln (I') und (I") enthält, bei denen an einen Rest Y¹ bzw. Y² unterschiedliche Silylgruppen gebunden sind. Schließlich kann es sich bei Mischung (A) auch um Gemische verschiedener Verbindungen der Formeln (I') und (I") handeln, in denen insgesamt mindestens 2 unterschiedliche Arten an Silylgruppen vorhanden sind, wobei jedoch sämtliche an jeweils einen Rest Y¹ bzw. Y² gebundenen Silylgruppen bevorzugt identisch sind.

Falls es sich bei Mischung (A) um verschiedene Arten von Verbindungen der Formeln (I') und (I") handelt, sind Mischungen, die sowohl über Verbindungen mit Endgruppen der Formel (II) mit b = 1 als auch über Verbindungen mit Endgruppen der Formel (II) mit b = 3 verfügen, bevorzugt. In einer besonderen Ausführung der Erfindung handelt es sich um Mischungen, die sowohl über Verbindungen mit Endgruppen der Formel (II) mit b = 1 und a = 0 oder 1 als auch über Verbindungen mit Endgruppen der Formel (II) mit b = 3 und a = 0 verfügen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Bei Rest R³ handelt es sich um eine Gruppe -CH(COOR')-CH₂-COOR', eine Gruppe - (CR¹₂)_{b}-SiRₐ(OR²)₃₋ₐ mit R, R', R¹, R², a und b gleich einer der in Formel (I) angegebenen Bedeutungen oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen, insbesondere um eine lineare, verzweigte oder cyclische Alkylgruppe mit 1 bis 8 Kohlenstoffatomen.

Bei den Resten R' handelt es sich vorzugsweise um Alkylgruppen mit 1 bis 10 Kohlenstoffatomen, besonders bevorzugt um Methyl-, Ethyl- oder Propylreste.

Beispiele für Reste R³ gleich gegebenenfalls substituierten Kohlenwasserstoffrest sind die für R angegebenen Reste, insbesondere Cyclohexyl-, Cyclopentyl-, n- und iso-Propyl-, n-, iso- und t-Butyl-, die diversen Stereoisomere des Pentylrests, Hexylrests oder Heptylrests sowie der Phenylrest.

Bei Rest Y¹ handelt es sich bevorzugt um solche, die sich aus mindestens zwei Urethan- und/oder Harnstoffgruppen, mindestens einer Polyether- und/oder Polyestereinheit, mindestens zwei Gruppen Y² sowie gegebenenfalls weiteren Molekülbausteinen zusammensetzen. Vorzugsweise sind die Polyether- und/oder Polyestereinheiten mit den Gruppen Y² über die Urethan- und/oder Harnstoffgruppen miteinander verknüpft und die Endgruppen der Formel (II) vorzugsweise an die Gruppen Y² gebunden.

Besonders bevorzugt setzt sich Y¹ aus mindestens zwei Urethangruppen, mindestens einer Polyether- und/oder Polyestereinheit, mindestens zwei Gruppen Y² sowie gegebenenfalls weiteren Molekülbausteinen zusammen.

Vorzugsweise bestehen die Reste Y¹ im Mittel zu mindestens 70 Gew.-%, bevorzugt mindestens 80 Gew.-%, insbesondere mindestens 90 Gew.-%, aus Urethangruppen, Gruppen Y² und Polyether- und/oder Polyestereinheiten, jeweils bezogen auf das mittlere Gesamtgewicht aller Reste Y¹.

In einer besonderen Ausführung der Erfindung bestehen die Reste Y¹ ausschließlich aus Urethangruppen, Gruppen Y² und Polyether- und/oder Polyestereinheiten.

Bei den in den Gruppen Y¹ enthaltenen Polyether- und/oder Polyesterbausteinen handelt es sich vorzugsweise um verzweigte und/oder unverzweigte Polyether- oder Polyesterbausteine mit einer mittleren Molmasse Mₙ (Zahlenmittel) von 200 bis 24 000 g/mol. Dabei werden Polyetherbausteine bevorzugt. Diese weisen vorzugsweise eine mittlere Molmasse Mₙ von 900 bis 9 000 g/mol, insbesondere von 1900 bis 6 100 g/mol, auf. Sie weisen bevorzugt keine oder eine Verzweigungsstelle auf.

Die zahlenmittlere Molmasse Mₙ wird bestimmt mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl.

Besonders bevorzugt entsprechen die in den Gruppen Y¹ enthaltenen Polyetherbausteine der Formel

- (R⁴-O)ₙR⁴- (III),

wobei
R⁴ gleich oder verschieden sein kann und einen gegebenenfalls substituierten Alkylrest mit 2 bis 10 Kohlenstoffatomen bedeutet und
n für eine ganze Zahl steht, mit der Maßgabe, dass n im Mittel eine Größe aufweist, dass die Polyethereinheiten eine mittlere Molmasse Mₙ von 200 bis 24 000 g/mol aufweisen.

Bevorzugt handelt es sich bei R⁴ um Alkylreste mit 2 bis 4 Kohlenstoffatomen, besonders bevorzugt um Gruppen der Formeln -CH₂-CH₂-, -CH(CH₃)-CH₂- und -CH₂-CH(CH₃)-, insbesondere um -CH(CH₃)-CH₂- und -CH₂-CH(CH₃)-.

Bei den Resten Y² handelt es sich vorzugsweise um gegebenenfalls substituierte Kohlenwasserstoffreste mit 4 bis 30 Kohlenstoffatomen, einen N,N,N-trialkylsubstituierten Isocyanuratrest oder einen N,N,N-triarylsubstituierten Isocyanuratrest, bevorzugt um Kohlenwasserstoffreste mit 6 bis 20 Kohlenstoffatomen, besonders bevorzugt um aromatische Kohlenwasserstoffreste mit 6 bis 20 Kohlenstoffatomen, insbesondere um einen zweiwertigen Toluylrest oder einen zweiwertigen Diphenylmethanrest.

Beispiele für Reste Y² sind der zweiwertige Isophoronrest, 1,6-Hexylrest, 2,4- oder 2,6-Toluylreste sowie 4,4'- oder 2,4' Diphenylmethanreste, wobei die aromatischen Reste bevorzugt werden.

Die erfindungsgemäße Mischung (A) kann auf beliebige Weise hergestellt werden, wie z.B. durch Vermischen von verschiedenen Verbindungen der Formel (I).

Die erfindungsgemäße Mischung (A) ist vorzugsweise herstellbar durch Umsetzung von Polyolen, Di- und/oder Polyisocyanaten und Aminosilanen.

Ein weiterer Gegenstand der Erfindung sind Mischungen (A) herstellbar durch Umsetzung von
(a) mindestens einem Polyol,
(b) mindestens einem Di- und/oder Polyisocyanat und
(c) mindestens einem Aminosilan der Formel

   HNR3-(CR¹₂)_{b}-SiRₐ(OR²)₃₋ₐ (IV)

   und/oder dessen Teilhydrolysate,
   wobei R, R¹, R², R³, a und b eine der in Formel (I) angegebenen Bedeutungen haben,
   sowie gegebenenfalls weiteren Komponenten,
   mit der Maßgabe, dass die Komponenten (a), (b), (c) sowie die gegebenenfalls weiteren Komponenten in einem Mengenverhältnis eingesetzt werden, nach dem auf 1 Mol Isocyanatgruppen der Komponente (b) sowie weiterer, gegebenenfalls im Reaktionsgemisch anwesender isocyanatfunktioneller Komponenten mehr als 0,5 Mol bis maximal 0,95 Mol Aminogruppen der Komponente (c) kommen und mit den Isocyanatgruppen zur Reaktion gebracht werden.

Ein weiterer Gegenstand der Erfindung ist ein Verfahren zur Herstellung der Mischungen (A) durch Umsetzung von
(a) mindestens einem Polyol,
(b) mindestens einem Di- und/oder Polyisocyanat und
(c) mindestens einem Aminosilan der Formel

   HNR³-(CR¹₂)_{b}-SiRₐ(OR²)₃₋ₐ (IV)

   und/oder dessen Teilhydrolysate,
   wobei R, R¹, R², R³, a und b eine der in Formel (I) angegebenen Bedeutungen haben,
   sowie gegebenenfalls weiteren Komponenten
   mit der Maßgabe, dass die Komponenten (a), (b), (c) sowie die gegebenenfalls weiteren Komponenten in einem Mengenverhältnis eingesetzt werden, nach dem auf 1 Mol Isocyanatgruppen der Komponente (b) sowie weiterer, gegebenenfalls im Reaktionsgemisch anwesender isocyanatfunktioneller Komponenten mehr als 0,5 Mol bis maximal 0,95 Mol Aminogruppen der Komponente (c) kommen und mit den Isocyanatgruppen zur Reaktion gebracht werden.

Bei den erfindungsgemäß eingesetzten Polyolen (a) handelt es sich vorzugsweise um verzweigte oder unverzweigte Polyether- oder Polyesterpolyole, bevorzugt um Polyetherpolyole, besonders bevorzugt um Polypropylenglycole, insbesondere um unverzweigte Polypropylenglycole oder Polypropylenglycole mit einer Verzweigungsstelle.

Die erfindungsgemäß eingesetzten Polyole (a) haben eine mittlere Molmasse Mₙ von bevorzugt 200 bis 24 000 g/mol, besonders bevorzugt von 400 bis 10 000 g/mol, insbesondere von 900 bis 9 000 g/mol.

Als Komponente (a) können auch Mischungen aus unverzweigten und einfach verzweigten Polyolen eingesetzt werden.

In einer besonders vorteilhaften Ausführung der Erfindung werden als Polyol (a) Polypropylenglycole mit einer mittleren Molmasse Mₙ von 1900 bis 6 100 g/mol eingesetzt. Diese sind vorzugsweise unverzweigt.

Erfindungsgemäß eingesetzte Polyole (a) sind handelsübliche Produkte bzw. nach in der Chemie gängigen Verfahren herstellbar.

Beispiele für erfindungsgemäß eingesetzte Komponente (b) sind alle gebräuchlichen Di- oder Polyisocyanate, wie z.B. Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, insbesondere dem 2,4- sowie dem 2,6-TDI sowie Mischungen dieser Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocyanat oder aber Trimerisate (Biurete oder Isocyanurate) der oben genannten Diisocyanate. Es können auch Mischungen verschiedener Di- und/oder Polyisocyanate eingesetzt werden.

Bevorzugt handelt es sich bei Komponente (b) um aromatische Di- oder Polyisocyanate, besonders bevorzugt um sämtliche oben genannte Typen und Derivate des Diisocyanatodiphenylmethans (MDI) und Tolylendiisocyanats (TDI).

Erfindungsgemäß eingesetzte Isocyanate (b) sind handelsübliche Produkte bzw. nach in der Chemie gängigen Verfahren herstellbar.

Erfindungsgemäß wird Polyol (a) vorzugsweise in solchen Mengen eingesetzt, dass auf 1 Mol NCO-Gruppen der Komponente (b) sowie weiterer, gegebenenfalls im Reaktionsgemisch anwesender NCO-haltiger Komponenten mindestens 0,1 Mol, besonders bevorzugt mindestens 0,2 Mol, insbesondere mindestens 0,25 Mol, Hydroxylgruppen der Komponente (a) eingesetzt werden. Erfindungsgemäß wird Polyol (a) vorzugsweise in solchen Mengen eingesetzt, dass auf 1 Mol NCO-Gruppen der Komponente (b) sowie weiterer, gegebenenfalls im Reaktionsgemisch anwesender NCO-haltiger Komponenten höchstens 0,45 Mol, besonders bevorzugt bei höchstens 0,40 Mol insbesondere bei höchstens 0,35 Mol, Hydroxylgruppen der Komponente (a) eingesetzt werden.

Bevorzugt handelt es sich bei Komponente (c) um HN[(CH₂)₃-Si(OCH₃)₃]₂, HN[(CH₂)₃-Si(OC₂H₅)₃]₂, HN[(CH₂),-Si-(OCH₃)₂CH₃]₂, HN[(CH₂)₃-Si(OC₂H₅)₂CH₃]₂, HN[(CH₂)-Si(OCH₃)₃]₂, HN[(CH₂)-Si(OC₂H₅)₃]₂, HN[(CH₂)-Si(OCH₃)₂CH₃]₂, HN[(CH₂)-Si(OC₂H₅)₂CH₃]₂, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si-(OCH₃)₂CH₃, cyclo-C₆H₁₁NH(CH₂)₃-Si(OC₂H₅)₂CH₃, cyclo-C₆H₁₁NH(CH₂)-Si(OCH)₃, cyclo-C₆H₁₁NH(CH₂)-Si(OC₂H₅)₃, cyclo-C₆H₁₁NH(CH₂)-Si(OCH₃)₂CH₃, Cyclo-C₆H₁₁NH(CH₂)-Si(OC₂H₅)₂CH₃, Phenyl-NH(CH₂)₃-Si-(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)-Si(OCH₃)₃, Phenyl-NH(CH₂)-Si(OC₂,H₅)₃, Phenyl-NH(CH₂)-Si(OCH₃)₂CH₃, Phenyl-NH(CH₂)-Si(OC₂H₅)₂CH₃ sowie Alkyl-NH(CH₂)₃-Si(OCH₃)3, Alkyl-NH(CH₂) 3-Si(OC₂H₅)₃, Alkyl-NH(CH₂)₃-Si(OCH₃)₂CH₃, Alkyl-NH(CH₂)₃-Si(OC₂H₅)₂CH₃, Alkyl-NH(CH₂)-Si(OCH₃)₃, Alkyl-NH(CH₂)-Si(OC₂H₅)₃, Alkyl-NH(CH₂)-Si(OCH₃)₂CH₃ und Alkyl-NH(CH₂)-Si(OC2H₅)₂CH₃ und deren Teilhydrolysate, besonders bevorzugt um cyclo-C₆H₁₁NH(CH₂)₃-Si(OC₂H₅)₃, cyclo-C₆H₁₁NH(CH₂)-Si(OCH₃)₂CH₃, cyclo-C₆H₁₁NH(CH₂)₃-Si(OC₂H₅)₂CH₃, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)2CH₃ sowie Alkyl-NH(CH₂)₃-Si(OCH₃)₃, Alkyl-NH(CH₂)₃-Si(OC₂H₅)₃, Alkyl-NH(CH₂)₃-Si(OCH₃)₂CH₃, Alkyl-NH(CH₂)₃-Si(OC₂H₅)₂CH₃, Alkyl-NH(CH₂)-Si(OCH₃)₃, Alkyl-NH(CH₂)-Si(OC₂H₅)₃, Alkyl-NH(CH₂)-Si(OCH₃)₂CH₃ und Alkyl-NH(CH₂)-Si(OC₂H₅)₂CH₃ und deren Teilhydrolysate, wobei "Alkyl" vorzugsweise für Ethyl-, n-Propyl-, i-Propyl-, n-Butyl-, i-Butyl-, t-Butyl- sowie die verschiedenen Stereoisomere des Pentyl-, Hexyl-, Heptyl- oder Octylrestes steht.

Erfindungsgemäß wird Komponente (c) vorzugsweise in solchen Mengen eingesetzt, dass auf 1 Mol Isocyanatgruppen der Komponente (b) sowie weiterer, gegebenenfalls im Reaktionsgemisch anwesender isocyanatfunktioneller Komponenten mindestens 0,55 Mol, besonders bevorzugt mindestens 0,60 Mol, insbesondere mindestens 0,65 Mol, Amingruppen der Komponente (c) eingesetzt und mit den Isocyanatgruppen zur Reaktion gebracht werden.

Erfindungsgemäß wird Komponente (c) vorzugsweise in solchen Mengen eingesetzt, dass auf 1 Mol NCO-Gruppen der Komponente (b) sowie weiterer, gegebenenfalls im Reaktionsgemisch anwesender NCO-haltiger Komponenten höchstens 0,90 Mol, besonders bevorzugt höchstens 0,85 Mol, insbesondere höchstens 0,75 Mol, Amingruppen der Komponente (c) eingesetzt werden.

Bei den gegebenenfalls eingesetzten weiteren Komponenten kann es sich um isocyanatreaktive Verbindungen (d), die verschieden sind zu Komponente (a) und (c), Monoisocyanate (e) und Katalysatoren (f) handeln.

Beispiele für gegebenenfalls eingesetzte Komponente (d) sind Verbindungen mit einer oder mehreren NH-, OH- oder SH-Funktionen.

Als gegebenenfalls eingesetzte Komponente (d) können beispielsweise monomere Alkohole, wie Methanol, Ethanol oder Butanol, eingesetzt werden, bevorzugt Alkohole mit mindestens 6 Kohlenstoffatomen, besonders bevorzugt Alkohole mit mindestens 8 Kohlenstoffatomen, insbesondere mit mindestens 10 Kohlenstoffatomen, wobei die Alkohole (d) bevorzugt über lineare oder verzweigte Alkylreste verfügen. Diese Alkohole reagieren dabei ebenfalls mit den Di- oder Polyisocyanaten (b). Es resultieren Verbindungen analog Formel (I), deren Kettenenden nicht ausschließlich silanterminiert sind, sondern auch über einen gewissen Anteil urethangebunder Alkylendgruppen verfügen.

Des Weiteren können als Komponente (d) auch monomere Alkohole mit 2 bis 4 Hydroxylgruppen, bevorzugt 2 Hydroxylgruppen, eingesetzt werden, wie z.B. Glycol, Propandiol, Glycerin und Pentaerythrit, wobei 1,4-Butandiol oder Dimerdiol, wie z.B. Pripol 2033 der Firma Croda, besonders bevorzugt sind.

Falls Komponente (d) eingesetzt wird, handelt es sich vorzugsweise um Mengen, dass auf 1 Mol NCO-Gruppen der Komponente (b) sowie weiterer, gegebenenfalls im Reaktionsgemisch anwesender NCO-haltiger Komponenten höchstens 0,20 Mol, besonders bevorzugt höchstens 0,1 Mol, NCO-reaktive Gruppen der Komponente (d) eingesetzt werden. Zur Herstellung der erfindungsgemäßen Mischung (A) wird bevorzugt keine Komponente (d) eingesetzt.

Erfindungsgemäß können als weitere Komponenten Verbindungen mit einer Isocyanatgruppe (e) eingesetzt werden, wie z.B. Butylisocyanat, Cyclohexylisocyanat oder Phenylisocyanat.

Falls Komponente (e) eingesetzt wird, handelt es sich vorzugsweise um Mengen, dass auf 1 Mol NCO-Gruppen der Komponente (b) höchstens 0,20 Mol, besonders bevorzugt höchstens 0,1 Mol, insbesondere 0,05 Mol, NCO-Gruppen der Komponente (e) eingesetzt werden. Zur Herstellung der erfindungsgemäßen Mischung (A) wird bevorzugt keine Komponente (e) eingesetzt.

Die erfindungsgemäße Herstellung der Mischungen (A) kann in Gegenwart eines Katalysators (f) erfolgen, was bevorzugt ist.

Beispiele für gegebenenfalls eingesetzte Katalysatoren (f) sind bismuthaltige Katalysatoren, wie z.B. der Borchi^{®} Kat 22, Borchi^{®} Kat VP 0243, Borchi^{®} Kat VP 0244 der Fa. Borchers GmbH, sowie auch diejenigen Verbindungen, die unten als Härtungskatalysatoren (F) beschrieben sind.

Falls zur Herstellung der Mischungen (A) Katalysatoren (f) eingesetzt werden, werden Mengen von 0,001 bis 5 Gewichtsteilen, insbesondere Mengen von 0,05 bis 1 Gewichtsteilen, jeweils bezogen auf 100 Gewichtsteile Mischung (A), bevorzugt.

In einer bevorzugten Ausführung der Erfindung ist die Mischung (A) aus Edukten hergestellt worden, die zu mindestens 80 Gew.-%, besonders bevorzugt mindestens 90 Gew.-%, insbesondere mindestens 95 Gew.-%, ganz besonders bevorzugt 100%, aus den Komponenten (a), (b) und (c) bestehen, jeweils bezogen auf das Gesamtgewicht aller Komponenten (a) bis (e).

Beim erfindungsgemäßen Verfahren werden bevorzugt keine über die Komponenten (a), (b), (c), gegebenenfalls (d), gegebenenfalls (e) sowie gegebenenfalls (f) hinausgehende Bestandteile eingesetzt.

Bei dem erfindungsgemäßen Verfahren werden die Komponenten (a), (b), (c) sowie die gegebenenfalls weiteren Komponenten in einem Mengenverhältnis eingesetzt, nach dem auf 1 Isocyanatgruppe vorzugsweise 0,6 bis 1,4, besonders bevorzugt 0,8 bis 1,2, isocyanatreaktive Gruppen kommen.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bei der erfindungsgemäßen Herstellung der Mischung (A) wird vorzugsweise zunächst entweder die gesamte Isocyanatkomponente (b) oder aber die gesamte Polyolkomponente (a) vorgelegt, anschließend die jeweils andere Komponente (a) bzw. (b) zugegeben und beide Komponenten miteinander reagieren gelassen. Aus dem dabei resultierenden isocyanatfunktionellen Zwischenprodukt wird anschließend durch eine Reaktion mit der Silankomponente (c) das Endprodukt hergestellt. Die einzelnen Reaktionsschritte können gegebenenfalls in Gegenwart eines Katalysators erfolgen. Wenn zusätzlich noch eine oder mehrere Komponenten (d) und/oder (e) eingesetzt werden, können diese prinzipiell zu jedem beliebigen Zeitpunkt der Reaktionsmischung zugegeben werden. Vorzugsweise werden jedoch gegebenenfalls einzusetzende Monoisocyanatverbindungen (e) gemeinsam mit der Komponente (b) eingesetzt, und gegebenenfalls einzusetzende weitere isocyanatreaktive Verbindungen (d) werden vorzugsweise gemeinsam oder aber direkt vor oder nach der Komponente (a) der Reaktionsmischung zugegeben.

Neben dieser bevorzugten Herstellweise sind aber auch noch viele Variationen des erfindungsgemäßen Verfahrens denkbar. So kann die Reaktionsreihenfolge prinzipiell auch umgekehrt und zunächst eine Reaktion zwischen der Isocyanatkomponente (b) und der Silankomponente (c) durchgeführt werden, bevor die Polyolkomponente (a) zugegeben wird. Ebenso ist vorstellbar, die Silankomponente (c) und die Polyolkomponente (a) entweder gleichzeitig aber über getrennte Zuleitungen der Reaktionsmischung zuzusetzen oder aber gemeinsam als Mischung einzusetzen und mit der Isocyanatkomponente (b) zur Reaktion zu bringen. Auch bei diesen Verfahrensvarianten können eventuelle weitere Komponenten (d) und/oder (e) prinzipiell zu jedem Zeitpunkt der Reaktionsmischung zugesetzt werden, wobei es jedoch dieselben oben genannten bevorzugten Kombinationen von (b) und (e) bzw. (a) und (d) gibt.

Ebenso ist bei dem erfindungsgemäßen Verfahren denkbar, einzelne Komponenten zu zwei oder mehreren unterschiedlichen Zeitpunkten jeweils in Teilen zuzugeben. So könnte beispielsweise zunächst die Polyolkomponente (a) zunächst nur mit einem Teil der Isocyanatkomponente (b) umgesetzt werden und das dabei je nach Stöchiometrie erhaltenen NCO- oder OH-funktionelle Zwischenprodukt erst in folgenden Reaktionsschritten mit dem noch ausstehenden Teilen der Isocyanatkomponente (b) sowie der Silankomponente (c) zur Reaktion gebracht werden.

Das erfindungsgemäße Verfahren wird vorzugsweise bei Temperaturen von mindestens 0°C, besonders bevorzugt mindestens 20°C und vorzugsweise höchstens 150°C, insbesondere höchstens 100°C, durchgeführt.

Das erfindungsgemäße Verfahren wird bevorzugt unter Ausschluss von (Luft-)Feuchtigkeit und beim Druck der umgebenden Atmosphäre, also etwa 900 bis 1100 hPa, durchgeführt.

Das erfindungsgemäße Verfahren kann kontinuierlich, z.B. in einem Röhrenreaktor mit mehreren neben- oder auch hintereinander liegenden Dosierstellen, oder diskontinuierlich, z.B. in einem herkömmlichen Reaktionskessel mit Rührwerk, erfolgen.

Ein weitere Verfahrensvariante zur Herstellung der Mischung (A) kann selbstverständlich auch darin bestehen, das zunächst Teilkomponenten der Mischung (A'), (A") etc. hergestellt und anschließend miteinander vermischt werden. Z.B. könnte hier zunächst eine Teilkomponente (A') aus den oben genannten Komponenten (a), (b), (c) sowie gegebenenfalls (d) und/oder (e) hergestellt werden. Die Teilkomponente (A') kann dabei gegebenenfalls auch noch nicht über eine hinreichend hohe Anzahl an Endgruppen der Formel (II) verfügen. Anschließend kann die Teilkomponente (A') mit einer zweiten Teilkomponente (A") vermischt werden, die beispielsweise ebenfalls aus den oben genannten Komponenten (a), (b) und (c) sowie gegebenenfalls (d) und/oder (e) oder auch nur (b) und (c) sowie gegebenenfalls (d) und/oder (e) hergestellt worden ist, wobei die resultierende Mischung (A) nun über eine hinreichend hohe Anzahl an Endgruppen der Formel (II) verfügt.

Die erfindungsgemäße bzw. erfindungsgemäß hergestellte Mischung (A) kann neben Verbindungen der Formel (I) noch weitere Stoffe enthalten, wie z.B. nicht umgesetzte Silanreste sowie Katalysator (f).

Die erfindungsgemäße Mischung (A) ist bevorzugt isocyanatfrei. Die Isocyanatfreiheit kann dabei auch dann erreicht werden, wenn die oben genannten Überschüsse an NCO-Gruppen, bezogen auf die NCO-reaktiven Gruppen, eingesetzt werden, weil die überschüssigen NCO-Gruppen z.B. auch mit gebildeten Urethan- und/oder Harnstoffeinheiten unter Allophanat- bzw. Biuretbildung reagieren können.

Die erfindungsgemäße Mischung (A) weist vorzugsweise eine mittlere Molmasse Mₙ von mindestens 400 g/mol, besonders bevorzugt mindestens 800 g/mol, und vorzugsweise höchstens 10 000 g/mol, besonders bevorzugt höchstens 8 000 g/mol, insbesondere höchstens 5 000 g/mol, auf.

Die Viskosität der Mischung (A) beträgt vorzugsweise mindestens 1 Pas, bevorzugt mindestens 10 Pas, besonders bevorzugt mindestens 20 Pas, und vorzugsweise höchstens 1000 Pas, bevorzugt höchstens 500 Pas, insbesondere höchstens 200 Pas, jeweils gemessen bei 25°C.

Die erfindungsgemäßen bzw. erfindungsgemäß hergestellten Mischungen (A) können zu allen Zwecken eingesetzt werden, zu denen auch bisher silanterminierte Polyurethane eingesetzt worden sind.

Die erfindungsgemäßen bzw. erfindungsgemäß hergestellten Mischungen (A) sind unter Ausschluss von Wasser lagerfähig und bei Zutritt von Wasser bei Raumtemperatur vernetzbar, durch was sich eine Vielzahl von Anwendungsmöglichkeiten ergibt. Zusätzlich zu den in der Mischung (A) enthaltenen Verbindungen der Formel (I) können die vernetzbaren Massen alle weiteren Stoffe enthalten, die auch bisher in vernetzbaren Massen eingesetzt wurden.

Ein weiterer Gegenstand der Erfindung sind vernetzbare Massen (M) enthaltend
(A) mindestens zwei verschiedene Verbindungen der Formel

   Y-[NH-C(=O)-NR³-(CR¹₂)_{b}-SiRₐ(OR²)₃₋ₐ]ₓ (I),

   wobei Y, R, R¹, R², R³, a, b und x eine der oben dafür angegebenen Bedeutungen haben,
   mit den Maßgaben, dass ein Teil der Reste Y mindestens eine Urethan- und/oder Harnstoffgruppe sowie mindestens eine Polyether- und/oder Polyestergruppe enthält
   und dass es sich bei mehr als 50% aller Urethan- und Harnstoffgruppen, die in den Verbindungen der Formel (I) enthalten sind, um Harnstoffgruppen handelt, die Teil einer Endgruppe der Formel

   -NH-C(=O)-NR³-(CR¹₂)_{b}-SiRₐ(OR²)₃₋ₐ (II)

   sind,
   gegebenenfalls
(B) Polymere, die nicht der Formel (I) entsprechen,
(C) basischen Stickstoff aufweisende Organosiliciumverbindungen,
   gegebenenfalls
(D) Füllstoffe,
   gegebenenfalls
(E) Siliconharze,
   gegebenenfalls
(F) Katalysatoren,
   gegebenenfalls
(G) Haftvermittler,
   gegebenenfalls
(H) Wasserfänger,
   gegebenenfalls
(I) nicht reaktive Weichmacher,
   gegebenenfalls
(J) Additive und
   gegebenenfalls
(K) Zuschlagstoffe.
Bei Komponente (A) handelt es sich dabei bevorzugt um solche umfassend Verbindungen (A1) und (A2).

Vorzugsweise enthalten die erfindungsgemäßen Massen (M) die Komponente (A) in Konzentrationen von 50 bis 99 Gew.-%, besonders bevorzugt 60 bis 98 Gew.-%, sofern es sich um transparente Massen handelt. Handelt es sich um füllstoffhaltige, nicht transparente Massen, enthalten die erfindungsgemäßen Massen (M) die Komponente (A) vorzugsweise in Konzentrationen von 10 bis 70 Gew.-%, besonders bevorzugt 20 bis 60 Gew.-%.

Die erfindungsgemäßen Massen (M) sind feuchtigkeitshärtend, d.h. es handelt sich vorzugsweise um flüssige oder pastöse Massen, die bei Kontakt mit Feuchtigkeit und/oder Luftfeuchtigkeit aushärten.

Bei Komponente (B) können alle bisher bekannten kondensationsfähige Gruppen aufweisenden Polymere eingesetzt werden, die nicht der Formel (I) entsprechen.

Erfindungsgemäß eingesetzte Polymere (B) enthalten bevorzugt keine Harnstoffeinheiten.

Beispiele für Polymere (B) sind alkoxysilanterminierte Polyether (B1). Diese weisen vorzugsweise mittlere Molmassen Mₙ von 1 000 bis 50 000 g/mol, insbesondere von 8 000 bis 30 000 g/mol, auf. Entsprechende Produkte sind beispielsweise unter den Namen MS-Polymer^{®} der Fa. Kaneka oder GENIOSIL^{®} STP-E der Fa. Wacker Chemie AG kommerziell erhältlich.

Bevorzugt enthalten die erfindungsgemäßen Massen (M) keine silanvernetzenden Polymere (B), bei denen es sich nicht um silanterminierten Polyether (B1) handelt.

Falls die erfindungsgemäßen Massen (M) silanvernetzende Polyether (B1) enthalten, handelt es sich um Mengen von bevorzugt höchstens 50 Gew.-%, insbesondere höchstens 25 Gew.-%, und mindestens 1 Gew.-%, insbesondere mindestens 5 Gew.-%, jeweils bezogen auf das Gewicht der gesamten Masse (M). In einer besonders bevorzugten Ausführung der Erfindung enthalten die erfindungsgemäßen Massen (M) jedoch überhaupt keine Polymere (B).

Bei den in den erfindungsgemäßen Massen (M) enthaltenen, basischen Stickstoff aufweisenden Organosiliciumverbindungen (C) handelt es sich bevorzugt um Organosiliciumverbindungen enthaltend Einheiten der Formel

D_{c}Si(OR⁵)_{d}R⁶ₑO_{(4-c-d-e)/2} (VII),

worin
R⁵ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit basischem Stickstoff bedeutet,
R⁶ gleich oder verschieden sein kann und einen einwertigen, gegebenenfalls substituierten SiC-gebundenen, von basischem Stickstoff freien organischen Rest bedeutet,
c 0, 1, 2, 3 oder 4, bevorzugt 1, ist,
d 0, 1, 2 oder 3, bevorzugt 1, 2 oder 3, besonders bevorzugt 2 oder 3, ist und
e 0, 1, 2 oder 3, bevorzugt 1 oder 0, ist,
mit der Maßgabe, dass die Summe aus c+d+e kleiner oder gleich 4 ist und pro Molekül mindestens ein Rest D anwesend ist.

Bei den erfindungsgemäß eingesetzten Organosiliciumverbindungen (C) kann es sich sowohl um Silane handeln, d.h. Verbindungen der Formel (VII) mit c+d+e=4, als auch um Siloxane, d.h. Verbindungen enthaltend Einheiten der Formel (VII) mit c+d+e≤3, wobei es sich bevorzugt um Silane handelt.

Beispiele für gegebenenfalls substituierte Kohlenwasserstoffreste R⁵ sind die für Rest R angegebenen Beispiele.

Bei den Resten R⁵ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Rest R⁶ sind die für R angegebenen Beispiele.

Bei Rest R⁶ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)3-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂NH(CH₂)₃-, (C₄H₉)₂NH(CH₂)₃-, (C₅H₁₁)₂NH(CH₂)₃-, (C₆H₁₃)₂NH(CH₂)₃-, (C₇H₁₅)₂NH(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂NH(CH₂)-, (C₄H₉)₂NH(CH₂)-, (C₅H₁₁)₂NH(CH₂)-, (C₆H₁₃)₂NH(CH₂)-, (C₇H₁₅)₂NH(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- und cyclo-C₆H₁₁NH(CH₂)₃-Rest.

Beispiele für die erfindungsgemäß eingesetzten Silane der Formel (VII) sind sämtliche Silane, die bereits als Beispiele für die Komponente (c) genannt worden sind, wie auch deren Teilhydrolysate, sowie H₂N(CH₂)₂NH(CH₂)₃-Si(OCH₃)₃, H₂N(CH₂)₂NH(CH₂)₃-Si(OC₂H₅)3, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)3-Si(OH)_{3,} H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, wie auch deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)3-Si(OCH₃)CH₃, cyclo-C₆H₁₁NH(CH₂)₃-Si(OCH₃)₃, Cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)3-Si(OCH₃)₂CH₃ sowie jeweils deren Teilhydrolysate besonders bevorzugt sind.

Die erfindungsgemäß eingesetzten Organosiliciumverbindungen (C) können in den erfindungsgemäßen Massen (M) auch die Funktion eines Härtungskatalysators oder -cokatalysators übernehmen.

Des Weiteren können die erfindungsgemäß eingesetzten Organosiliciumverbindungen (C) als Haftvermittler und/oder als Wasserfänger wirken.

Die erfindungsgemäß eingesetzten Organosiliciumverbindungen (C) sind handelsübliche Produkte bzw. nach in der Chemie gängigen Verfahren herstellbar.

Die erfindungsgemäßen Massen (M) enthalten die Komponente (C) in Mengen von bevorzugt 0,01 bis 25 Gewichtsteilen, besonders bevorzugt 0,1 bis 10 Gewichtsteilen, insbesondere 0,5 bis 5 Gewichtsteilen, jeweils bezogen auf 100 Gewichtsteile Komponente (A).

Bei den in den erfindungsgemäßen Massen (M) gegebenenfalls eingesetzten Füllstoffen (D) kann es sich um beliebige, bisher bekannte Füllstoffe handeln.

Beispiele für Füllstoffe (D) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (D) um Calciumcarbonat, Talkum, Aluminiumtrihydroxid sowie Kieselsäure, wobei Calciumcarbonat und Aluminiumtrihydroxid besonders bevorzugt werden. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (D) haben einen Feuchtigkeitsgehalt von bevorzugt unter 1 Gew.-%, besonders bevorzugt von unter 0,5 Gew.-%.

Falls die erfindungsgemäßen Massen (M) Füllstoffe (D) enthalten, handelt es sich um Mengen von vorzugsweise 10 bis 1000 Gewichtsteilen, besonders bevorzugt 50 bis 500 Gewichtsteilen, insbesondere 70 bis 200 Gewichtsteilen, jeweils bezogen auf 100 Gewichtsteile Bestandteil (A). Die erfindungsgemäßen Massen (M) enthalten bevorzugt Füllstoffe (D).

In einer besonderen Ausführung der Erfindung enthalten die erfindungsgemäßen Massen (M) als Füllstoffe (D) eine Kombination aus
a) Kieselsäure, insbesondere pyrogene Kieselsäure, und
b) Calciumcarbonat, Aluminiumtrihydroxid und/oder Talkum.

Bei den in den erfindungsgemäßen Massen (M) gegebenenfalls eingesetzten Siliconharzen (E) handelt es sich vorzugsweise um Verbindungen enthaltend Einheiten der Formel

R⁷_{f}(R⁸O)_{g}SiO_{(4-f-g)/2} (VIII),

wobei
- R⁷: gleich oder verschieden sein kann und Wasserstoffatom, einen einwertigen, SiC-gebundenen, gegebenenfalls substituierten aliphatischen oder aromatischen Kohlenwasserstoffrest,
- R⁸: gleich oder verschieden sein kann und Wasserstoffatom oder einen einwertigen, gegebenenfalls substituierten Kohlenwasserstoffrest bedeutet,
- f: 0, 1, 2 oder 3 ist und
- g: 0, 1, 2 oder 3, bevorzugt 0, 1 oder 2, besonders bevorzugt 0 oder 1, ist,
mit der Maßgabe, dass die Summe aus f+g kleiner oder gleich 3 ist und in mindestens 50 %, bevorzugt mindestens 60 %, der Einheiten der Formel (VIII) f gleich 0 oder 1 ist.

Komponente (E) besteht vorzugsweise zu mindestens 90 Gew.-% aus Einheiten der Formel (VIII). Besonders bevorzugt besteht Komponente (E) ausschließlich aus Einheiten der Formel (VIII).

Beispiele für Reste R⁷ sind die oben für R angegebenen Beispiele.

Bevorzugt handelt es sich bei Rest R⁷ um gegebenenfalls mit Halogenatomen substituierte, einwertige SiC-gebundene aliphatische oder aromatische Kohlenwasserstoffreste mit 1 bis 18 Kohlenstoffatomen, besonders bevorzugt um den Methyl- oder Phenylrest. Vorzugsweise weisen mindestens 40 %, bevorzugt mindestens 50 % der Einheiten der Formel (VIII) einen Rest R⁷ auf, bei dem es sich um einen Phenylrest handelt.

Beispiele für Rest R⁸ sind Wasserstoffatom oder die für Rest R angegebenen Beispiele.

Bevorzugt handelt es sich bei Rest R⁸ um Wasserstoffatom oder gegebenenfalls mit Halogenatomen substituierte Alkylreste mit 1 bis 10 Kohlenstoffatomen, besonders bevorzugt um den Methyl- und Ethylrest.

Beispiele für als Komponente (E) einsetzbare Siliconharze sind Organopolysiloxanharze, die im Wesentlichen, vorzugsweise ausschließlich, aus (Q)-Einheiten der Formeln SiO_{4/2}, Si(OR⁸)O_{3/2}, Si(OR⁸)₂O_{2/2} und Si(OR⁸)₃O_{1/2}, (T)-Einheiten der Formeln PhSiO_{3/2}, PhSi(OR⁸)O_{2/2} und PhSi(OR⁸)₂O_{1/2}, (D)-Einheiten der Formeln Me₂SiO_{2/2} und Me₂Si(OR⁸)O_{1/2} sowie (M)-Einheiten der Formel Me₃SiO_{1/2} bestehen, wobei Me für einen Methylrest, Ph für einen Phenylrest und R⁸ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, wobei das Harz pro Mol (T)-Einheiten bevorzugt 0-2 Mol (Q)-Einheiten, 0-2 Mol (D)-Einheiten und 0-2 Mol (M)-Einheiten enthält.

Bevorzugte Beispiele für als Komponenten (E) einsetzbare Siliconharze sind Organopolysiloxanharze, die im Wesentlichen, vorzugsweise ausschließlich, aus T-Einheiten der Formeln PhSiO_{3/2}, PhSi(OR⁸)O_{2/2} und PhSi(OR⁸)₂O_{1/2}, gegebenenfalls T-Einheiten der Formeln MeSiO_{3/2}, MeSi(OR⁸)O_{2/2} und MeSi(OR⁸)₂O_{1/2} sowie gegebenenfalls D-Einheiten der Formeln Me₂SiO_{2/2} und Me₂Si(OR⁸)O_{1/2} bestehen, wobei Me für einen Methylrest, Ph für einen Phenylrest und R⁸ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von Phenylsilicon- zu Methylsilicon-Einheiten von 0,5 bis 2,0. Der Gehalt an D-Einheiten in diesen Siliconharzen liegt vorzugsweise unter 10 Gew.-%.

Vorzugsweise besitzen die als Komponenten (E) einsetzbare Siliconharze eine mittlere Molmasse Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 100 000 g/mol, insbesondere bei höchstens 50 000 g/mol. Sie können bei 23°C und 1000 hPa sowohl fest als auch flüssig sein, wobei flüssige Siliconharze bevorzugt werden.

Bei den als Komponenten (E) einsetzbare Siliconharzen handelt es sich um handelsübliche Produkte, z.B. um verschiedene SILRES^{®}-Typen der Fa. Wacker Chemie AG, wie SILRES^{®} IC 368, SILRES^{®} IC 678 oder SILRES^{®} SY231.

Falls die erfindungsgemäßen Massen (M) die Komponente (E) enthalten, handelt es sich um Mengen von mindestens 5 Gewichtsteilen, besonders bevorzugt mindestens 10 Gewichtsteilen, insbesondere mindestens 50 Gewichtsteilen, und vorzugsweise höchstens 1000 Gewichtsteilen, besonders bevorzugt höchstens 500 Gewichtsteilen, insbesondere höchstens 300 Gewichtsteilen, bezogen auf 100 Gewichtsteile der Mischung (A).

Bei den in den erfindungsgemäßen Massen (M) gegebenenfalls eingesetzten Katalysatoren (F) kann es sich um beliebige, bisher bekannte Katalysatoren für durch Silankondensation härtende Massen handeln.

Beispiele für metallhaltige Härtungskatalysatoren (F) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (F) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin.

Ebenfalls als Katalysator (F) können saure Verbindungen eingesetzt werden, wie Phosphorsäure and ihre Ester, Toluolsulfonsäure, Schwefelsäure, Salpetersäure oder auch organische Carbonsäuren, z.B. Essigsäure und Benzoesäure.

In einer Ausführung der Erfindung handelt es sich bei den gegebenenfalls eingesetzten Katalysatoren (F) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90% Gew.-%, vorzugsweise zu mindestens 95 Gew.-%, aus Verbindungen der Formel (I) besteht, in denen b ungleich 1 ist.

Falls die erfindungsgemäßen Massen (M) Katalysatoren (F) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

Bei den in den erfindungsgemäßen Massen (M) gegebenenfalls eingesetzten Haftvermittlern (G) kann es sich um beliebige, bisher für durch Silankondensation härtenden Systemen beschriebene Haftvermittler handeln.

Beispiele für Haftvermittler (G) sind Epoxysilane, wie Glycidoxypropyltrimethoxysilane, Glycidoxypropyl-methyldimethoxysilan, Glycidoxypropyltriethoxysilan oder Glycidoxypropyl-metyhldiethoxysilan, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilylmethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyltrimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Massen (M) Haftvermittler (G) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile der Komponente (A).

Bei den in den erfindungsgemäßen Massen (M) gegebenenfalls eingesetzten Wasserfängern (H) kann es sich um beliebige, für durch Silankondensation härtenden Systemen beschriebene Wasserfänger handeln.

Beispiele für Wasserfänger (H) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan.

Falls die erfindungsgemäßen Massen (M) Wasserfänger (H) enthalten, handelt es sich um Mengen von vorzugsweise 0,5 bis 30 Gewichtsteilen, besonders bevorzugt 1 bis 20 Gewichtsteilen, jeweils bezogen auf 100 Gewichtsteile der Komponente (A).

Bei den in den erfindungsgemäßen Massen (M) gegebenenfalls eingesetzten nicht reaktiven Weichmachern (I) kann es sich um beliebige, bisher bekannte für silanvernetzende Systeme typische Weichmacher handeln.

Beispiele für nicht reaktive Weichmacher (I) sind Phthalsäureester (z.B. Dioctylphthalat, Diisooctylphthalat und Diundecylphthalat), perhydrierte Phthalsäureester (z.B. 1,2-Cyclohexandicarbonsäurediisononylester und 1,2-Cyclohexandicarbonsäuredioctylester) Adipinsäureester (z.B. Dioctyladipat), Benzoesäureester, Glycolester, Ester gesättigter Alkandiole (z.B. 2,2,4-Trimethyl-1,3-pentandiolmonoisobutyrate und 2,2,4-Trimethyl-1,3-pentandioldiisobutyrate), Phosphorsäureester, Sulfonsäureester, Polyester, Polyether (z.B. Polyethylenglycole und Polypropylenglycole mit Molmassen Mₙ von vorzugsweise 400 bis 10 000 g/mol), Polystyrole, Polybutadiene, Polyisobutylene, paraffinische Kohlenwasserstoffe und hochmolekulare, verzweigte Kohlenwasserstoffe.

Falls die erfindungsgemäßen Massen (M) nicht reaktive Weichmacher (I) enthalten, handelt es sich um Mengen von vorzugsweise 0,01 bis 100 Gewichtsteilen bezogen auf 100 Gewichtsteile Komponente (A).

Da nicht reaktive Weichmacher (I) jedoch Härte und Zugscherfestigkeiten der aus den erfindungsgemäßen Massen (M) herstellbaren Klebstoffe signifikant verringern, enthalten die erfindungsgemäßen Massen (M) bevorzugt weniger als 10 Gewichtsteile, besonders bevorzugt weniger als 5 Gewichtsteile, insbesondere weniger als 2 Gewichtsteile, nicht reaktive Weichmacher (I), jeweils bezogen auf 100 Gewichtsteile Komponente (A).

In einer besonders vorteilhaften Ausführung der Erfindung enthalten die erfindungsgemäßen Massen (M) keine nicht reaktiven Weichmacher (I).

Bei den in den erfindungsgemäßen Massen (M) gegebenenfalls eingesetzten Additiven (J) kann es sich um beliebige, bisher bekannte, für silanvernetzende Systeme typische Additive handeln.

Bei den erfindungsgemäß gegebenenfalls eingesetzten Additiven (J) handelt es sich bevorzugt um Antioxidantien, UV-Stabilisatoren, wie z.B. sog. HALS-Verbindungen, Fungizide und Pigmente.

Falls die erfindungsgemäßen Massen (M) Additive (J) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Komponente (A).

Bei den erfindungsgemäß gegebenenfalls eingesetzten Zuschlagsstoffen (K) handelt es sich bevorzugt um Tetraalkoxysilane, z.B. Tetraethoxysilan und/oder deren Teilkondensate, Weichmacher, Reaktivweichmacher, Rheologieadditive, Flammschutzmittel und organische Lösungsmittel.

Bevorzugte Reaktivweichmacher (K) sind Verbindungen, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilane, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (K) handelt es sich bevorzugt um Polyamidwachse, hydrierte Rizinusöle oder Stearate.

Beispiele für organische Lösungsmittel (K) sind niedermolekulare Ether, Ester, Ketone, aromatische und aliphatische sowie gegebenenfalls halogenhaltige Kohlenwasserstoffe und Alkohole, wobei letztere bevorzugt werden.

Den erfindungsgemäßen Massen (M) werden vorzugsweise keine organischen Lösungsmitteln (K) zugesetzt.

Falls die erfindungsgemäßen Massen (M) eine oder mehrere Komponenten (K) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Die erfindungsgemäßen Massen (M) enthalten außer den Komponenten (A) bis (K) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen (M) handelt es sich bevorzugt um Formulierungen mit Viskositäten von bevorzugt 500 bis 1 000 000 mPas, besonders bevorzugt von 1 000 bis 500 000 mPas, insbesondere 5 000 bis 100 000 mPas, jeweils bei 25°C.

Bei den erfindungsgemäßen Massen (M) handelt es sich bevorzugt um Kleb- oder Dichtstoff, besonders bevorzugt um Klebstoffe.

Ein weiterer Gegenstand der vorliegenden Erfindung ist ein Verfahren zur Herstellung der erfindungsgemäßen Massen (M) durch Mischen der einzelnen Komponenten in beliebiger Reihenfolge.

Die Herstellung der erfindungsgemäßen Massen (M) kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Dabei kann die Komponente (A) als die oben beschriebene, erfindungsgemäße Mischung eingesetzt werden oder die einzelnen in der Mischung (A) enthaltenen Verbindungen der Formel (I) getrennt voneinander.

Dieses Vermischen kann bei Raumtemperatur, d.h. bei Temperaturen zwischen 0 und 30°C und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Massen (M) handelt es sich bevorzugt um einkomponentige, unter Ausschluss von Wasser lagerfähige, bei Zutritt von Wasser bei Raumtemperatur vernetzbare Massen. Die erfindungsgemäßen Massen (M) können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Massen (M) reicht der übliche Wassergehalt der Luft aus. Die Vernetzung der erfindungsgemäßen Massen (M) erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehaltes der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der Erfindung sind Formkörper hergestellt durch Vernetzung der erfindungsgemäßen Mischungen (A) bzw. der Massen (M), insbesondere der Massen (M).

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Die erfindungsgemäßen Massen (M) weisen nach dem Aushärten Zugscherfestigkeiten von mindestens 5 MPa, bevorzugt mindestens 7 MPa und besonders bevorzugt mindestens 8 MPa auf.

Ein weiterer Gegenstand der Erfindung ist ein Verfahren zur Verklebung von Substraten, bei denen die erfindungsgemäße Masse auf die Oberfläche mindestens eines Substrates aufgebracht, diese Oberfläche dann mit dem zu verklebenden zweiten Substrat in Kontakt gebracht und anschließend vernetzen gelassen wird.

Beispiele für Substrate, die erfindungsgemäß verklebt werden können, sind insbesondere Holz aber auch Kunststoffe inkl. PVC, Beton, mineralische Untergründe, Metalle, Glas, Keramik und lackierte Oberflächen. Dabei können sowohl gleiche als auch unterschiedliche Materialen miteinander verklebt werden.

Ein weiterer Gegenstand der Erfindung ist ein Verfahren zur Herstellung von Materialverbunden, bei denen die erfindungsgemäße Masse auf mindestens ein Substrat aufgebracht und anschließend vernetzen gelassen wird.

Beispiele hierfür sind Beschichtungen, Verguss, z.B. Vergussmassen für LEDs oder sonstige elektronische Bauteile, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen (M) und mindestens einem Substrat so zusammengesetzt ist, dass zwischen den beiden Teilen eine feste, dauerhafte Verbindung besteht.

Die erfindungsgemäßen Mischungen (A) besitzen den Vorteil, dass sie leicht herstellbar sind.

Des Weiteren haben die erfindungsgemäßen Mischungen (A) den Vorteil, dass damit Klebstoffe mit hervorragenden Eigenschaften hergestellt werden können.

Die erfindungsgemäßen Massen (M) haben den Vorteil, dass sie leicht herzustellen sind.

Die erfindungsgemäßen vernetzbaren Massen (M) haben den Vorteil, dass sie sich durch eine sehr hohe Lagerstabilität und eine hohe Vernetzungsgeschwindigkeit auszeichnen.

Ferner haben die erfindungsgemäßen vernetzbaren Massen (M) den Vorteil, dass sie ein ausgezeichnetes Haftungsprofil aufweisen.

Des Weiteren haben die erfindungsgemäßen vernetzbaren Massen (M) den Vorteil, dass sie leicht zu verarbeiten sind.

Des Weiteren haben die erfindungsgemäßen vernetzbaren Massen (M) den Vorteil, dass daraus Klebstoffe mit hoher Zugscherfestigkeit erhalten werden können.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

In einem 2000 ml Reaktionsgefäß mit Rühr-, Kühl- und Heizmöglichkeiten werden 630 g (0,15 Mol) eines Polypropylenglycols mit einer mittleren Molmasse Mₙ von 4200 g/Mol (käuflich erhältlich unter der Bezeichnung Acclaim^{®} 4200 bei der Fa. Bayer Material Science, D-Leverkusen) vorgelegt und für 2 h bei 80°C und 1 mbar unter Rühren getrocknet. Dann wird auf Raumtemperatur abgekühlt, und anschließend werden 112,5 g (0,45 Mol) einer flüssigen Mischung aus 2,4'- und 4,4'-MDI (käuflich erhältlich unter der Bezeichnung Desmodur^{®} 2460M der Fa. Bayer Material Science, D-Leverkusen) zugegeben. Unmittelbar danach werden 0,13 g eines bismuthaltigen Katalysators (käuflich erhältlich unter der Bezeichnung Borchi^{®} Kat 0244 bei der Fa. Borchers, D-Langenfeld) zugegeben, woraufhin eine leicht exotherme Reaktion einsetzt, die zu einer Erwärmung der Reaktionsmischung um ca. 13°C führt. Die Reaktionsmischung wird für weitere 60 min ohne externe Heizung gerührt, wobei sie sich wieder auf Raumtemperatur abkühlt. Anschließend werden 156,8 g (0,6 Mol) 3-(N-Cyclohexyl)aminopropyl-trimethoxysilan (käuflich erhältlich unter der Bezeichnung GENIOSIL^{®} GF 92 bei der Fa. Wacker Chemie AG, D-München) zugegeben. Schließlich wird auf 80°C erwärmt und für 1 h bei dieser Temperatur gerührt. In der resultierenden Polymermischung lassen sich IR-spektroskopisch keine Isocyanatgruppen mehr nachweisen.

Die Reaktion der Isocyanatgruppen mit den isocyanatreaktiven Gruppen ist weitgehend statistisch verlaufen. Es haben etwa 1/3 der eingesetzten Isocyanatgruppen mit dem Polyol reagiert und etwa 2/3 mit dem zugegebenen Aminosilan.

Man erhält eine klare, durchsichtige Polymermischung, die bei 25°C eine Viskosität von 75 Pas aufweist. Sie lässt sich problemlos weiterverarbeiten.

### Beispiel 2

In einem 2000 ml Reaktionsgefäß mit Rühr-, Kühl- und Heizmöglichkeiten werden 630 g (0,15 Mol) eines Polypropylenglycols mit einer mittleren Molmasse Mₙ von 4200 g/Mol (Acclaim^{®} 4200 der Fa. Bayer Material Science, D-Leverkusen) vorgelegt und für 2 h bei 80°C und 1 mbar unter Rühren getrocknet. Dann wird auf Raumtemperatur abgekühlt, und anschließend werden 150,0 g (0,6 Mol) einer flüssigen Mischung aus 2,4'- und 4,4'-MDI (Desmodur^{®} 2460M der Fa. Bayer Material Science, D-Leverkusen) zugegeben. Unmittelbar danach werden 0,13 g eines bismuthaltigen Katalysators (käuflich erhältlich unter der Bezeichnung Borchi^{®} Kat 0244 bei der Fa. Borchers, D-Langenfeld) zugegeben, woraufhin eine leicht exotherme Reaktion einsetzt, die zu einer Erwärmung der Reaktionsmischung um ca. 12°C führt. Die Reaktionsmischung wird für weitere 60 min ohne externe Heizung gerührt, wobei sie sich wieder auf Raumtemperatur abkühlt. Anschließend werden 235,2 g (0,9 Mol) 3-(*N*-Cyclohexyl)aminopropyl-trimethoxysilan (GENIOSIL^{®} GF 92 der Fa. Wacker Chemie AG, D-München) zugegeben. Schließlich wird auf 80°C erwärmt und für 1 h bei dieser Temperatur gerührt. In der resultierenden Polymermischung lassen sich IR-spektroskopisch keine Isocyanatgruppen mehr nachweisen.

Die Reaktion der Isocyanatgruppen mit den isocyanatreaktiven Gruppen ist weitgehend statistisch verlaufen. Es haben etwa 1/4 der eingesetzten Isocyanatgruppen mit dem Polyol reagiert und etwa 3/4 mit dem zugegebenen Aminosilan.

Man erhält eine klare, durchsichtige Polymermischung, die bei 25°C eine Viskosität von 105 Pas aufweist. Sie lässt sich problemlos weiterverarbeiten.

### Beispiel 3 (Herstellung einer 1K-Klebstoffformulierung)

194,6 g des silanterminierten Polyurethangemischs, dessen Herstellung in Beispiel 1 beschrieben ist, 5 g N-(2-Aminoethyl)-aminopropyl-trimethoxysilan (GENIOSIL^{®} GF 9 der Fa. Wacker Chemie AG, D-München) und 0,4 g Dibutylzinn-bis-acetylacetonat werden vermischt und in einem Laborplanetenmischer der Fa. PC-Laborsystem, ausgestattet mit zwei Balkenmischern, bei ca. 25°C für 2 Minuten bei 200 U/min homogenisiert.

Die so erhaltene Mischung wird in eine 310 ml PE-Kartuschen abgefüllt, 24 Stunden bei 25°C gelagert und anschließend untersucht. Die Ergebnisse finden sich in Tabelle 1.

### Beispiel 4 (Herstellung einer 1K-Klebstoffformulierung)

194,6 g des silanterminierten Polyurethangemischs, dessen Herstellung in Beispiel 2 beschrieben ist, 5 g N-(2-Aminoethy)-aminopropyl-trimethoxysilan (GENIOSIL^{®} GF 9 der Fa. Wacker Chemie AG, D-München) und 0,4 g Dibutylzinn-bis-acetylacetonat werden vermischt und in einem Laborplanetenmischer der Fa. PC-Laborsystem, ausgestattet mit zwei Balkenmischern, bei ca. 25°C für 2 Minuten bei 200 U/min homogenisiert.

Die Formulierung wird in eine 310 ml PE-Kartuschen abgefüllt, 24 Stunden bei 25°C gelagert und anschließend untersucht.

### Bewertung der Klebstoffformulierungen der Beispiele 3 und 4:

Die Bestimmung der Zugscherfestigkeiten der Klebstoffformulierungen aus den Beispielen 3 und 4 erfolgt in Anlehnung an die DIN EN 204. Hierbei erfolgt ein Auftrag des Klebstoffes auf beide zu verklebenden Buchenhölzer, welche dann mit einem 100 µm Rakel abgezogen werden. Anschließend erfolgt das Verbinden der beiden Hölzer über eine Fläche von 1 mal 2 cm mit einem Anpressdruck von 5kg. Nach dem Anpressen von 24 Stunden werden die Hölzer im Normklima für 7 Tage Zeitraum gelagert. Anschließend erfolgt die Bestimmung der Zugscherfestigkeit. Es werden die in Tabelle 1 angegebenen Werte erzielt:

**Tabelle 1**

| | Beispiel 3 | Beispiel 4 |
|---|---|---|
| Zugscherfestigkeit [MPa] | 6,7 | 9,1 |

### Beispiel 5 (Herstellung einer 1K-Klebstoffformulierung

102 g des silanterminierten Polyurethangemischs, dessen Herstellung in Beispiel 1 beschrieben ist, werden mit 95 g Aluminiumtrihydroxid mit einer BET-Oberfläche von 3-5 m²/g und einem d50-Wert von 1,7-2,1 µm (käuflich erhältlich unter der Bezeichnung "Martinal OL 104" bei der Fa. Albemarle Corp.) unter Rühren eine Minute bei 600 U/min aufgeschlossen. Danach werden 3 g *N*-(2-Aminoethyl)-3-aminopropyl-trimethoxysilan (GENIOSIL^{®} GF 9 der Fa. Wacker Chemie AG, D-München) für 1 Minute bei 200 U/min eingemischt. Anschließend werden 0,2 g Dibutylzinn-bis-acetylacetonat zudosiert, für 2 Minuten bei 600 U/min und für 1 Minute bei 200 U/min beim Druck von 100 mbar homogenisiert und blasenfrei gerührt.

Die Formulierung wird in eine 310 ml PE-Kartusche abgefüllt, 24 Stunden bei 25°C gelagert und anschließend untersucht. Die Ergebnisse finden sich in Tabelle 2.

### Beispiel 6 (Herstellung einer 1K-Klebstoffformulierung)

102 g des silanterminierten Polyurethangemischs, dessen Herstellung in Beispiel 2 beschrieben ist, werden mit 95 g Aluminiumtrihydroxid mit einer BET-Oberfläche von 3-5 m²/g und einem d50-Wert von 1,7-2,1 µm (käuflich erhältlich unter der Bezeichnung "Martinal OL 104" bei der Fa. Albemarle Corp.) unter Rühren eine Minute bei 600 U/min aufgeschlossen. Danach werden 3 g N-(2-Aminoethyl)-3-aminopropyl-trimethoxysilan (GENIOSIL^{®} GF 9 der Fa. Wacker Chemie AG, D-München) für 1 Minute bei 200 U/min eingemischt. Anschließend werden 0,2 g Dibutylzinn-bis-acetylacetonat zudosiert für 2 Minuten bei 600 U/min und für 1 Minute bei 200 U/min beim Druck von 100 mbar homogenisiert und blasenfrei gerührt.

Die Formulierung wird in eine 310 ml PE-Kartuschen abgefüllt, 24 Stunden bei 25°C gelagert und anschließend untersucht.

### Bewertung der Klebstoffformulierungen der Beispiele 5 und 6:

Die Bestimmung der Zugscherfestigkeiten der Klebstoffformulierungen aus den Beispielen 5 und 6 erfolgt wie in der DIN EN 204 beschrieben. Hierbei erfolgt ein Auftrag des Klebstoffes auf beide zu verklebenden Buchenhölzer, welche dann mit einem 100 µm Rakel abgezogen werden. Anschließend erfolgt das Verbinden der beiden Hölzer über eine Fläche von 1 mal 2 cm mit einem Anpressdruck von 5kg. Nach dem Anpressen von 24 Stunden werden die Hölzer im Normklima für den angegebenen Zeitraum gelagert. Bei der Bestimmung des D1-Wertes wird die Zugscherfestigkeit der beiden verklebten Hölzer direkt nach der Lagerung gemessen. Bei der D4-Messung erfolgt nach dem Lagerzeitraum eine zusätzliche Lagerung für sechs Stunden im Kochwasser. Anschließend werden die Hölzer aus dem Wasser herausgenommen, abgetrocknet und eine Stunde bei Raumtemperatur gelagert. Anschließend erfolgt die Bestimmung der Zugscherfestigkeit. Es werden die in Tabelle 2 angegebenen Werte erzielt:

**Tabelle 2**

| | Zugscherfestigkeit [MPa] | |
|---|---|---|
| Lagerbedingungen | Beispiel 5 | Beispiel 6 |
| D1 (7 Tage Normklima) | 10,6 | 13,3 |
| D4 (21 Tage Normklima, 6 h Kochwasser) | 1,8 | 2,6 |

### Beispiel 7

In einem 2000 ml Reaktionsgefäß mit Rühr-, Kühl- und Heizmöglichkeiten werden 630 g (0,15 Mol) eines Polypropylenglycols mit einer mittleren Molmasse Mₙ von 4200 g/Mol (Acclaim^{®} 4200 der Fa. Bayer Material Science, D-Leverkusen) vorgelegt und für 2 h bei 80°C und 1 mbar unter Rühren getrocknet. Dann wird auf Raumtemperatur abgekühlt, und anschließend werden 78,4 g (0,45 Mol) einer 80:20-Mischung aus 2,4- und 2,6-TDI zugegeben. Unmittelbar danach werden 0,13 g eines bismuthaltigen Katalysators (käuflich erhältlich unter der Bezeichnung Borchi^{®} Kat 0244 bei der Fa. Borchers, D-Langenfeld) zugegeben, woraufhin eine leicht exotherme Reaktion einsetzt, die zu einer Erwärmung der Reaktionsmischung um ca. 14°C führt. Die Reaktionsmischung wird für weitere 60 min ohne externe Heizung gerührt, wobei sie sich wieder auf Raumtemperatur abkühlt. Anschließend werden 156,8 g (0,6 Mol) 3-(*N*-Cyclohexyl)aminopropyl-trimethoxysilan (GENIOSIL^{®} GF 92 der Fa. Wacker Chemie AG, D-München) zugegeben. Schließlich wird auf 80°C erwärmt und für 1 h bei dieser Temperatur gerührt. In der resultierenden Polymermischung lassen sich IR-spektroskopisch keine Isocyanatgruppen mehr nachweisen.

Die Reaktion der Isocyanatgruppen mit den isocyanatreaktiven Gruppen ist weitgehend statistisch verlaufen. Es haben etwa 1/3 der eingesetzten Isocyanatgruppen mit dem Polyol reagiert und etwa 2/3 mit dem zugegebenen Aminosilan.

Man erhält eine klare, durchsichtige Polymermischung, die bei 25°C eine Viskosität von 27 Pas aufweist. Sie lässt sich problemlos weiterverarbeiten.

### Beispiel 8

In einem 2000 ml Reaktionsgefäß mit Rühr-, Kühl- und Heizmöglichkeiten werden 630 g (0,15 Mol) eines Polypropylenglycol mit einer mittleren Molmasse Mₙ von 4200 g/Mol (Acclaim^{®} 4200 der Fa. Bayer Material Science, D-Leverkusen) vorgelegt und für 2 h bei 80°C und 1 mbar unter Rühren getrocknet. Dann wird auf Raumtemperatur abgekühlt, und anschließend werden 104,5 g (0,6 Mol) einer 80:20-Mischung aus 2,4- und 2,6-TDI zugegeben. Unmittelbar danach werden 0,13 g eines bismuthaltigen Katalysators (käuflich erhältlich unter der Bezeichnung Borchi^{®} Kat 0244 bei der Fa. Borchers, D-Langenfeld) zugegeben, woraufhin eine leicht exotherme Reaktion einsetzt, die zu einer Erwärmung der Reaktionsmischung um ca. 13°C führt. Die Reaktionsmischung wird für weitere 60 min ohne externe Heizung gerührt, wobei sie sich wieder auf Raumtemperatur abkühlt. Anschließend werden 235,2 g (0,9 Mol) 3-(*N*-Cyclohexyl)aminopropyl-trimethoxysilan (GENIOSIL^{®} GF 92 der Fa. Wacker Chemie AG, D-München) zugegeben. Schließlich wird auf 80°C erwärmt und für 1 h bei dieser Temperatur gerührt. In der resultierenden Prepolymermischung lassen sich IR-spektroskopisch keine Isocyanatgruppen mehr nachweisen.

Die Reaktion der Isocyanatgruppen mit den isocyanatreaktiven Gruppen ist weitgehend statistisch verlaufen. Es haben etwa 1/4 der eingesetzten Isocyanatgruppen mit dem Polyol reagiert und etwa 3/4 mit dem zugegebenen Aminosilan.

Man erhält eine klare, durchsichtige Polymermischung, die bei 25 °C eine Viskosität von 35 Pas aufweist. Sie lässt sich problemlos weiterverarbeiten.

### Beispiel 9 (Herstellung einer 1K-Klebstoffformulierung)

102 g des silanterminierten Polyurethangemischs, dessen Herstellung in Beispiel 7 beschrieben ist, werden mit 95 g Aluminiumtrihydroxid mit einer BET-Oberfläche von 3-5 m²/g und einem d50-Wert von 1,7-2,1 µm (käuflich erhältlich unter der Bezeichnung "Martinal OL 104" bei der Fa. Albemarle Corp.) unter Rühren eine Minute bei 600 U/min aufgeschlossen. Danach werden 3 g *N*-(2-Aminoethyl)-3-aminopropyl-trimethoxysilan (GENIOSIL^{®} GF 9 der Fa. Wacker Chemie AG, D-München) für 1 Minute bei 200 U/min eingemischt. Anschließend werden 0,2 g Dibutylzinn-bis-acetylacetonat zudosiert für 2 Minuten bei 600 U/min und für 1 Minute bei 200 U/min beim Druck von 100 mbar homogenisiert und blasenfrei gerührt.

Die Formulierung wird in eine 310 ml PE-Kartuschen abgefüllt, 24 Stunden bei 25°C gelagert und anschließend untersucht. Die Ergebnisse finden sich in Tabelle 3.

### Beispiel 10 (Herstellung einer 1K-Klebstoffformulierung)

102 g des silanterminierten Polyurethangemischs, dessen Herstellung in Beispiel 8 beschrieben ist, werden mit 95 g Aluminiumtrihydroxid mit einer BET-Oberfläche von 3-5 m²/g und einem d50-Wert von 1,7-2,1 µm (käuflich erhältlich unter der Bezeichnung "Martinal OL 104" bei der Fa. Albemarle Corp.) unter Rühren eine Minute bei 600 U/min aufgeschlossen. Danach werden 3 g N-(2-Aminoethyl)-3-aminopropyl-trimethoxysilan (GENIOSIL^{®} GF 9 der Fa. Wacker Chemie AG, D-München) für 1 Minute bei 200 U/min eingemischt. Anschließend werden 0,2 g Dibutylzinn-bis-acetylacetonat zudosiert für 2 Minuten bei 600 U/min und für 1 Minute bei 200 U/min beim Druck von 100 mbar homogenisiert und blasenfrei gerührt.

Die Formulierung wird in eine 310 ml PE-Kartuschen abgefüllt, 24 Stunden bei 25°C gelagert und anschließend untersucht.

### Bewertung der Klebstoffformulierungen der Beispiele 9 und 10:

Die Bestimmung der Zugscherfestigkeiten der Klebstoffformulierungen aus den Beispielen 9 und 10 erfolgt wie in der DIN EN 204 beschrieben. Hierbei erfolgt ein Auftrag des Klebstoffes auf beide zu verklebenden Buchenhölzer, welche dann mit einem 100 µm Rakel abgezogen werden. Anschließend erfolgt das Verbinden der beiden Hölzer über eine Fläche von 1 mal 2 cm mit einem Anpressdruck von 5kg. Nach dem Anpressen von 24 Stunden werden die Hölzer im Normklima für den angegebenen Zeitraum gelagert. Bei der Bestimmung des D1-Wertes wird die Zugscherfestigkeit der beiden verklebten Hölzer direkt nach der Lagerung gemessen. Bei der D4-Messung erfolgt nach dem Lagerzeitraum eine zusätzliche Lagerung für sechs Stunden im Kochwasser. Anschließend werden die Hölzer aus dem Wasser herausgenommen, abgetrocknet und eine Stunde bei Raumtemperatur gelagert. Anschließend erfolgt die Bestimmung der Zugscherfestigkeit. Es werden die in Tabelle 3 angegebenen Werte erzielt:

**Tabelle 3**

| | Zugscherfestigkeit [MPa] | |
|---|---|---|
| Lagerbedingungen | Beispiel 9 | Beispiel 10 |
| D1 (7 Tage Normklima) | 8,8 | 11,4 |
| D4 (21 Tage Normklima, 6 h Kochwasser) | 1,5 | 1,7 |

## Patentansprüche

1. Vernetzbare Massen (M) enthaltend
(A) Mischungen enthaltend mindestens zwei verschiedene Verbindungen der Formel
Y- [NH-C (=O) -NR³-(CR¹₂)_{b}-SiRₐ(OR²)₃₋ₐ]ₓ (I),
wobei
Y einen x-wertigen organischen Rest bedeutet,
R³ gleich oder verschieden sein kann und eine Gruppe - CH(COOR')-CH₂-COOR', eine Gruppe - (CR¹₂)_{b}-SiRₐ(OR²)₃₋ₐ oder einen gegebenenfalls substituierten Kohlenwasserstoffrest mit 1 bis 20 Kohlenstoffatomen bedeutet,
R' gleich oder verschieden sein kann und einen einwertigen, gegebenenfalls substituierten Kohlenwasserstoffrest darstellt,
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist,
mit den Maßgaben, dass ein Teil der Reste Y mindestens eine Urethan- und/oder Harnstoffgruppe sowie mindestens eine Polyether- und/oder Polyestergruppe enthält
und dass es sich bei mehr als 55% aller Urethan- und Harnstoffgruppen, die in den Verbindungen der Formel (I) der Mischung (A) enthalten sind, um Harnstoffgruppen handelt, die Teil einer Endgruppe der Formel
-NH-C(=O)-NR³-(CR¹₂)_{b}-SiRₐ(OR²)₃₋ₐ (II)
sind,
gegebenenfalls (B) Polymere, die nicht der Formel (I) entsprechen,
(C) basischen Stickstoff aufweisende Organosiliciumverbindungen in Mengen von 0,1 bis 25 Gewichtsteilen, bezogen auf 100 Gewichtsteile Komponente (A),
gegebenenfalls (D) Füllstoffe,
gegebenenfalls (E) Siliconharze,
gegebenenfalls (F) Katalysatoren,
gegebenenfalls (G) Haftvermittler,
gegebenenfalls (H) Wasserfänger,
gegebenenfalls (I) nicht reaktive Weichmacher,
gegebenenfalls (J) Additive und
gegebenenfalls (K) Zuschlagstoffe.

2. Vernetzbare Massen (M) gemäß Anspruch 1, **dadurch gekennzeichnet, dass** es sich bei den Mischungen (A) um solche handelt enthaltend Verbindungen (Al) der Formel
Y¹-[NH-C(=O)-NR³-(CR¹₂)_{b}-SiRₐ(OR²)₃₋ₐ]_{x'} (I')
und Verbindungen (A2) der Formel
Y²-[NH-C(=O)-NR³-(CR¹₂)_{b}-SiRₐ(OR²)₃₋ₐ]_{x"} (I"),
wobei
Y¹ einen x'-wertigen organischen Rest bedeutet, der mindestens eine Urethan- und/oder Harnstoffgruppe und mindestens eine Polyether- und/oder Polyestereinheit sowie mindestens eine Gruppe Y² enthält,
Y² einen x"-wertigen gegebenenfalls substituierten, Kohlenwasserstoffrest mit 2 bis 40 Kohlenstoffatomen, einen N,N,N-trialkyl-substituierten Isocyanuratring oder einen N,N,N-triaryl-substituierten Isocyanuratring bedeutet, der frei ist von Urethan-, Harnstoff-, Polyether- und Polyestergruppen,
x' und x" jeweils unabhängig voneinander die bei Formel (I) angegebene Bedeutung für x aufweisen sowie R, R¹, R², R³, a und b eine der in Formel (I) angegebenen Bedeutungen haben,
mit der Maßgabe, dass es sich bei mehr als 55% aller Urethan- und Harnstoffgruppen, die in den Verbindungen der Formel (I') und (II'') der Mischung (A) enthalten sind, um Harnstoffgruppen handelt, die Teil einer Endgruppe der Formel
-NH-C(=O)-NR³-(CR¹₂)_{b}-SiRₐ (OR²)₃₋ₐ (II)
sind.

3. Vernetzbare Massen gemäß einem oder mehreren der Ansprüche 1 bis 2, **dadurch gekennzeichnet, dass** sie keine nicht reaktiven Weichmacher (I) enthalten.

4. Verfahren zur Herstellung der Massen (M) gemäß einem oder mehreren der Ansprüche 1 bis 3 durch Mischen der einzelnen Komponenten in beliebiger Reihenfolge.

5. Formkörper hergestellt durch Vernetzung der Massen (M) gemäß einem oder mehreren der Ansprüche 1 bis 3.

6. Verfahren zur Verklebung von Substraten, bei denen die Masse gemäß einem oder mehreren der Ansprüche 1 bis 3 auf die Oberfläche mindestens eines Substrates aufgebracht, diese Oberfläche dann mit dem zu verklebenden zweiten Substrat in Kontakt gebracht und anschließend vernetzen gelassen wird.

7. Verfahren zur Herstellung von Materialverbunden, bei denen die Masse gemäß einem oder mehreren der Ansprüche 1 bis 3 auf mindestens ein Substrat aufgebracht und anschließend vernetzen gelassen wird.

## Claims

1. Crosslinkable compositions (M) comprising
(A) mixtures comprising at least two different compounds of the formula
Y-[NH-C(=O)-NR³-(CR¹₂)_{b}-SiRₐ(OR²)₃₋ₐ]ₓ (I),
where
Y is an x-valent organic radical,
R³ may be identical or different and is a group-CH(COOR')-CH₂-COOR', a group -(CR¹₂)_{b}-SiRₐ(OR²)₃₋ₐ or an optionally substituted hydrocarbon radical having 1 to 20 carbon atoms,
R' may be identical or different and is a monovalent, optionally substituted hydrocarbon radical,
R may be identical or different and is a monovalent, optionally substituted, SiC-bonded hydrocarbon radical,
R¹ may be identical or different and is hydrogen atom or a monovalent, optionally substituted hydrocarbon radical, which may be attached to the carbon atom via nitrogen, phosphorus, oxygen, sulfur, or carbonyl group,
R² may be identical or different and is hydrogen atom or a monovalent, optionally substituted hydrocarbon radical,
x is an integer from 1 to 10,
a may be identical or different and is 0, 1, or 2, and
b may be identical or different and is an integer from 1 to 10,
with the provisos that some of the radicals Y contain at least one urethane group and/or urea group and also at least one polyether group and/or polyester group, and that more than 55% of all the urethane groups and urea groups which are present in the compounds of the formula (I) in the mixture (A) are urea groups which are part of an end group of the formula
-NH-C(=O)-NR³-(CR¹₂)_{b}-SiRₐ(OR²)₃₋ₐ (II),
optionally (B) polymers which do not conform to the formula (I),
(C) basic nitrogen-containing organosilicon compounds in amounts of from 0.1 to 25 parts by weight, based on 100 parts by weight of component (A),
optionally (D) fillers,
optionally (E) silicone resins,
optionally (F) catalysts,
optionally (G) adhesion promoters,
optionally (H) water scavengers,
optionally (I) nonreactive plasticizers,
optionally (J) additives, and
optionally (K) adjuvants.

2. Crosslinkable compositions (M) according to Claim 1, **characterized in that** the mixtures (A) comprise compounds (A1) of the formula
Y¹-[NH-C(=O)-NR³-(CR¹₂)_{b}-SiRₐ(OR²)₃₋ₐ]_{x'} (I')
and compounds (A2) of the formula
Y²-[NH-C(=O)-NR³-(CR¹₂)_{b}-SiRₐ(OR²)₃₋ₐ]_{x"} (I"),
where
Y¹ is an x'-valent organic radical which comprises at least one urethane group and/or urea group and at least one polyether unit and/or polyester unit, and also at least one group Y²,
Y² is an x" -valent, optionally substituted hydrocarbon radical having 2 to 40 carbon atoms, an N,N,N-trialkyl-substituted isocyanurate ring, or an N,N,N-triaryl-substituted isocyanurate ring, which is free from urethane, urea, polyether, and polyester groups,
x' and x" each independently of one another have the definition of x as reported for formula (I), and R, R¹, R², R³, a, and b have one of the definitions indicated in formula (I),
with the proviso that more than 55% of all the urethane groups and urea groups which are present in the compounds of the formula (I') and (II") in the mixture (A) are urea groups which are part of an end group of the formula
-NH-C(=O)-NR³-(CR¹₂)_{b}-SiRₐ(OR²)₃₋ₐ (II).

3. Crosslinkable compositions according to one or more of Claims 1 to 2, **characterized in that** they comprise no nonreactive plasticizers (I).

4. Process for producing the compositions (M) according to one or more of Claims 1 to 3 by mixing the individual components in any order.

5. Shaped article produced by crosslinking the compositions (M) according to one or more of Claims 1 to 3.

6. Method for adhesive bonding of substrates, which comprises applying the composition according to one or more of Claims 1 to 3 to the surface of at least one substrate, then contacting said surface with the second substrate to be bonded, and subsequently allowing crosslinking to take place.

7. Method for producing composites of materials, which comprises applying the composition according to one or more of Claims 1 to 3 to at least one substrate and subsequently allowing crosslinking to take place.

## Revendications

1. Matières réticulables (M) contenant
(A) des mélanges contenant au moins deux différents composés de formule
Y-[NH-C(=O)-NR³-(CR¹₂)_{b}-SiRₐ(OR²)₃₋ₐ]ₓ (I),
dans laquelle
Y représente un radical organique x-valent,
R³ peut être le même ou différent et représente un groupe -CH(COOR')-CH₂-COOR', un groupe -(CR¹₂)_{b}-SiRₐ(OR²)₃₋ₐ ou un radical hydrocarboné éventuellement substitué ayant de 1 à 20 atomes de carbone,
R' peut être le même ou différent et représente un radical hydrocarboné monovalent, éventuellement substitué,
R peut être le même ou différent et représente un radical hydrocarboné monovalent, éventuellement substitué, lié par une liaison SiC,
R¹ peut être le même ou différent et représente un atome d'hydrogène ou un radical hydrocarboné monovalent, éventuellement substitué, qui peut être lié à l'atome de carbone par un atome d'azote, de phosphore, d'oxygène, de soufre ou un groupe carbonyle,
R² peut être le même ou différent et représente un atome d'hydrogène ou un radical hydrocarboné monovalent, éventuellement substitué,
x est un nombre entier valant de 1 à 10,
a peut être le même ou différent et est 0, 1 ou 2 et
b peut être le même ou différent et est un nombre entier valant de 1 à 10,
avec les conditions qu'une partie des radicaux Y contient au moins un groupe uréthane et/ou un groupe urée ainsi qu'au moins un groupe polyéther et/ou un groupe polyester
et que plus de 55 % de tous les groupes uréthane et urée qui sont contenus dans les composés de formule (I) du mélange (A) consistent en des groupes urée qui font partie d'un groupe en bout de chaîne de formule
-NH-(=O)-NR³-(CR¹₂)_{b}-SiRₐ(OR²)₃₋ₐ (II),
éventuellement (B) des polymères qui ne correspondent pas à la formule (I),
(C) des composés organosiliciés comportant un atome d'azote basique, en quantités de 0,1 à 25 parties en poids, par rapport à 100 parties en poids de composant (A),
éventuellement (D) des charges,
éventuellement (E) des résines silicone,
éventuellement (F) des catalyseurs,
éventuellement (G) des agents d'adhérence,
éventuellement (H) des agents déshydratants,
éventuellement (I) des plastifiants non réactifs,
éventuellement (J) des additifs et
éventuellement (K) des granulats.

2. Matières réticulables (M) selon la revendication 1, **caractérisées en ce que** pour ce qui est des mélanges (A) il s'agit de ceux contenant des composés (A1) de formule
Y¹-[NH-C(=O)-NR³-(CR¹₂)_{b}-SiRₐ(OR²)₃₋ₐ]_{x'} (I'),
et des composés (A2) de formule
Y²-[NH-C(=O)-NR³-(CR¹₂)_{b}-SiRₐ(OR²)₃₋ₐ]_{x"} (I"), où
Y¹ signifiant un radical organique x'-valent qui contient au moins un groupe uréthane et/ou un groupe urée et au moins une unité polyéther et/ou une unité polyester ainsi qu'au moins un groupe Y²,
Y² signifiant un radical hydrocarboné x"-valent éventuellement substitué, ayant de 2 à 40 atomes de carbone, un cycle isocyanurate substitué par N,N,N-trialkyle ou un cycle isocyanurate substitué par N,N,N-triaryle, qui est exempt de groupes uréthane, urée, polyéther et polyester,
x' et x" ont chacun indépendamment l'un de l'autre la signification indiquée pour x dans la formule (I), et R, R¹, R², R³, a et b ont l'une des significations indiquées dans la formule (I),
avec la condition que plus de 55 % de tous les groupes uréthane et urée qui sont contenus dans les composés de formules (I') et (II") du mélange (A) consistent en des groupes urée qui font partie d'un groupe en bout de chaîne de formule
-NH-C(=O)-NR³-(CR¹₂)_{b}-SiRₐ(OR²)₃₋ₐ (II).

3. Matières réticulables selon une ou plusieurs des revendications 1 et 2, **caractérisées en ce qu'**elles ne contiennent pas de plastifiants non réactifs (I).

4. Procédé pour la préparation des matières (M) selon une ou plusieurs des revendications 1 à 3, par mélange des composants individuels en un ordre quelconque.

5. Corps moulé, produit par réticulation des matières (M) selon une ou plusieurs des revendications 1 à 3.

6. Procédé pour le collage de supports, dans lequel on applique sur la surface d'au moins un support la matière selon une ou plusieurs des revendications 1 à 3, puis on met cette surface en contact avec le deuxième support à coller et ensuite on laisse réticuler.

7. Procédé pour la production de composites de matériaux, dans lequel on applique sur au moins un support la matière selon une ou plusieurs des revendications 1 à 3 et ensuite on la laisse réticuler.
